# EUROPEAN PATENT APPLICATION

(11) **EP 1 603 040 A2**
(43) Date of publication of application: **07.12.2005**
(21) Application number: 05253343.7
(22) Date of filing: 31.05.2005
(51) Int. Cl.: G06F 9/54

(54) **Information processing apparatus and device using SOAP**

(30) Priority: 01.06.2004 JP 2004163350
(71) Applicant: CANON KABUSHIKI KAISHA, Ohta-ku, Tokyo (JP)
(72) Inventor: Yokokura, Hidenori c/o Canon Kabushiki Kaisha, Tokyo (JP)
(74) Representative: Legg, Cyrus James Grahame

(57) **Abstract**

An information processing apparatus according to the present invention communicates with a device and includes an operation-acquisition-request receiving unit configured to receive from the device an operation acquisition request for acquiring an operation applied to the device from the information processing apparatus, an operation-transmitting unit configured to transmit an operation applied to the device to the device according to the operation acquisition request, and a response-transmitting unit configured to transmit a request for transmission of the operation acquisition request as a reply to communication from the device if there is an operation applied to the device.

## Description

### BACKGROUND OF THE INVENTION

### Field of the Invention

The present invention relates to information processing apparatuses and devices. In particular, the present invention is suitable for managing network devices, such as multi-function peripherals (MFP), connected to a network environment though the use of an information processing apparatus such as a host-server apparatus.

### Description of the Related Art

Nowadays, systems for managing devices on the Internet by centrally acquiring counter information or error information in a host-server apparatus based on the Web technology called SOAP (Simple Object Access Protocol)/XML (extensible Markup Language) have been developed. Considering growing needs for managing devices in such a centralized manner, these systems are expected to become more popular.

More specifically, Japanese Patent Laid-Open No. 2004-40630 discloses a system in which a backend host-server apparatus functions as a SOAP server and a customer information acquisition server functions as a SOAP client in the case of, for example, SOAP-based communication. In this case, if the information acquisition server detects an abnormality in a monitored device, the information acquisition server establishes a session by accessing the backend host-server apparatus (SOAP server) with the event as a trigger. Thereafter, information indicating the detected abnormal status in the monitored device is transmitted from the information acquisition server to the backend host-server apparatus.

Furthermore, the information acquisition server may periodically acquire information about the monitored device regardless of whether there occurs an abnormality in the monitored device and may transmit the acquired information to the backend host-server apparatus. Also in this case, the information acquisition server functions as a SOAP client that initiates communication.

On the other hand, in some cases, it may need to issue requests continuously from the backend host-server apparatus to the information acquisition server with arbitrary timing. Even in this case, since communication cannot be initiated from the SOAP server, the SOAP server waits to be periodically accessed by the SOAP client to pass a request command to the SOAP client.

For a system in which a customer information acquisition server functions as a SOAP client and a backend host-server apparatus functions as a SOAP server in every case, as in the above-described known system, the occurrence of an abnormality or accessing for periodic processing can be immediately reported from the information acquisition server to the host-server apparatus. For such a system, however, the host-server apparatus needs to wait for periodic accessing by the information acquisition server when the host-server apparatus desires to issue intermittent request commands to the information acquisition server.
This degrades the responsiveness to requests.

If the interval of polling from the SOAP client to the SOAP server is shortened to improve this responsiveness, the communication traffic becomes heavy, which leads to a heavy load on the CPU of the SOAP client.

In order to overcome this problem, the invention described in the above-referenced Japanese Patent Laid-Open No. 2004-40630 allows efficient transmission of commands from the information acquisition server to the host-server apparatus, while still using a protocol that only allows the information acquisition server to initiate communication.

More specifically, the remote monitoring device described in the above-referenced Japanese Patent Laid-Open No. 2004-40630 includes an information acquisition server for monitoring operating statuses, statuses of consumables, etc. of various devices and for transmitting the information and a host-server apparatus for receiving the information transmitted from the information acquisition server. In this remote monitoring device, changing means is provided to temporarily change the polling intervals at which the information acquisition server accesses the host server according to a command from the host-server apparatus.

On the other hand, a technique using a firewall to protect computers on a LAN communicable with the Internet from being invaded from outside the LAN is available.

The Internet is an open network that inter-connects computers, and connecting a corporate LAN directly to the Internet may allow malicious outside users to snoop corporate data or destroy the corporate system itself.

In order to protect from damage such as being invaded by outside users as described above, a computer, functioning as a firewall, that allows only particular data and protocols to pass therethrough is provided between the corporate LAN and the Internet so that all data exchanged between the inside and the outside of the corporate LAN passes therethrough.

With a firewall provided, however, without a pre-request from a device on the corporate LAN, it is difficult for a host-server apparatus existing outside the corporate LAN to initiate transmission to the device on the corporate LAN via the firewall. In short, it is difficult for the host-server apparatus outside the corporate LAN to promptly transmit various custom requests, such as a change to schedule information, to the device on the corporate LAN.

### SUMMARY OF THE INVENTION

The present invention has been conceived in light of these circumstances, and is directed to promptly issue to a device an operation instruction, such as a change to schedule information, from the host-server apparatus.

According to one aspect of the present invention, an information processing apparatus communicating with a device includes: operation-acquisition-request receiving means for receiving an operation acquisition request from the device for getting, from the information processing apparatus, an operation for execution by the device; operation-transmitting means for transmitting to the device an operation for execution by the device according to the operation-acquisition-request; and response-transmitting means for transmitting a request for transmission of the operation acquisition request in response to a communication from the device if there is an operation for execution by the device.

According to another aspect of the present invention, a device communicating with an information processing apparatus and arranged to perform an operation sent from the information processing apparatus comprises: communication means for communicating with the information processing apparatus; response-information receiving means for receiving response information from the information processing apparatus in response to the communication by the communication means; transmission means for transmitting to the information processing apparatus an operation acquisition request for getting, from the information processing apparatus, an operation for execution by the device; and operation-receiving means for receiving an operation corresponding to the operation acquisition request; wherein the transmission means transmits the operation acquisition request if the response information received by the response-information receiving means includes a request for transmission of the operation acquisition request.

According to still another aspect of the present invention, a network communication system includes the above-described information processing apparatus and device
According to still another aspect of the present invention, an information processing method for an information processing apparatus communicating with a device comprises: receiving from the device an operation acquisition request for getting, from the information processing apparatus, an operation for execution by the device; transmitting an operation for execution by the device to the device according to the operation acquisition request; and transmitting a request for transmission of the operation acquisition request in response to a communication from the device if there is an operation for execution by the device.
According to a further aspect of the present invention, a device method for a device arranged to perform an operation sent from an information processing apparatus comprises: receiving response information from the information processing apparatus in response to a communication from the device; transmitting to the information processing apparatus an operation-acquisition-request for getting, from the information processing apparatus, an operation for execution by the device; and receiving an operation corresponding to the operation acquisition request, wherein the operation acquisition request is transmitted to the information processing apparatus if the received response information includes a request for transmission of the operation acquisition request.
According to a yet further aspect of the present invention, a computer-executable program for causing a computer to execute an information processing method comprises: receiving from a device an operation acquisition request for acquiring an operation for execution by the device from the computer; transmitting an operation for execution by the device to the device according to the operation acquisition request; and transmitting a request for transmission of the operation acquisition request in response to a communication from the device if there is an operation for execution by the device.
According to a still further aspect of the present invention, a computer-executable program for causing a device to execute a device method comprises: receiving response information from an information processing apparatus in response to a communication from the device; transmitting to the information processing apparatus an operation-acquisition request for getting, from the information processing apparatus, an operation for execution by the device; and receiving an operation corresponding to the operation acquisition request, wherein the operation acquisition request is transmitted to the information processing apparatus if the received response information includes a request for transmission of the operation acquisition request.

According to still another aspect of the present invention, a recording medium stores the above-described computer-executable program(s).

Further features and advantages of the present invention will become apparent from the following description of exemplary embodiments (with reference to the attached drawings).

### BRIEF DESCRIPTION OF THE DRAWINGS

Fig. 1 is a diagram depicting the overall structure of a network system according to one embodiment of the present invention.

Fig. 2 is a diagram depicting the internal structure of a network device according to one embodiment of the present invention.

Fig. 3 is a diagram depicting the internal structure of a network host-server apparatus according to one embodiment of the present invention.

Fig. 4 is a diagram depicting one example of update information for each device in a host-server apparatus according to the present embodiment.

Fig. 5 is a diagram depicting one example of packet data referred to as post Alert transmitted from a client to a printing device using SOAP over HTTP, according to the present embodiment.

Fig. 6 is a diagram depicting one example of packet data in response to the post Alert packet in Fig. 5.

Fig. 7 is a diagram depicting one example of request packet data corresponding to a get Operation List requested in Fig. 6.

Fig. 8 is a diagram depicting one example of packet data in response to the get Operation List packet in Fig. 6.

Fig. 9 is a flowchart of a sequence for notifying a device of an instruction from a host-server apparatus.

Fig. 10 is a flowchart of a sequence for processing a request from a host-server apparatus in a device.

### DESCRIPTION OF THE EMBODIMENTS

Embodiments according to the present invention will now be described with reference to the attached drawings.

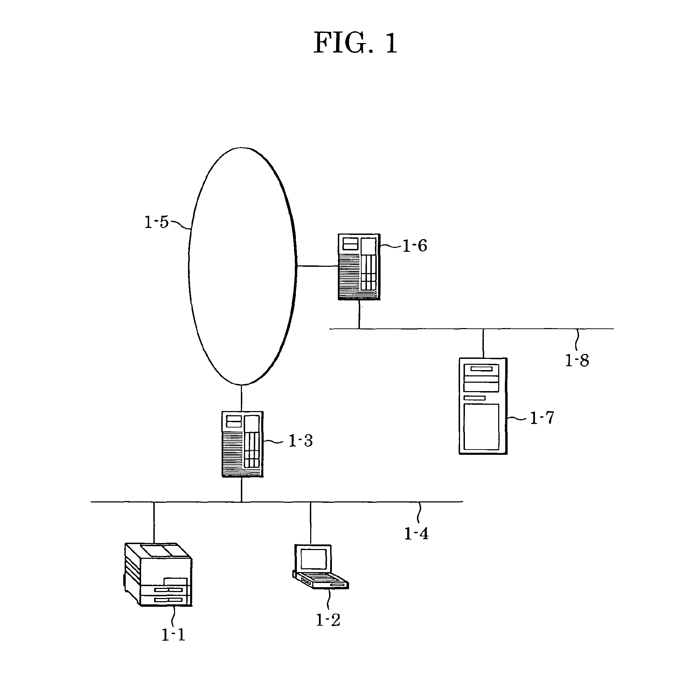

Fig. 1 is a diagram depicting the overall structure of a network system according to one embodiment of the present invention. Referring to Fig. 1, a device 1-1 regularly or irregularly transmits device information, such as counter information or error information, to a host-server apparatus (hereinafter, also referred to as a host server) 1-7 via the Internet 1-5 and a gateway apparatus 1-6.

A personal computer (PC) 1-2 is connected to an intranet LAN 1-4. The personal computer (PC) 1-2 can communicate with the device 1-1 via a network, and can initiate network printing by sending a print job to the device 1-1. A gateway apparatus 1-3 functions as a firewall via which the personal computer (PC) 1-2 is connected to the Internet 1-5 and the gateway apparatus 1-6. An intranet LAN 1-8 is another intranet LAN in addition to the intranet LAN 1-4, and includes the host-server apparatus 1-7. The number of connected PCs and the number of connected print devices are not limited to those shown in Fig. 1.

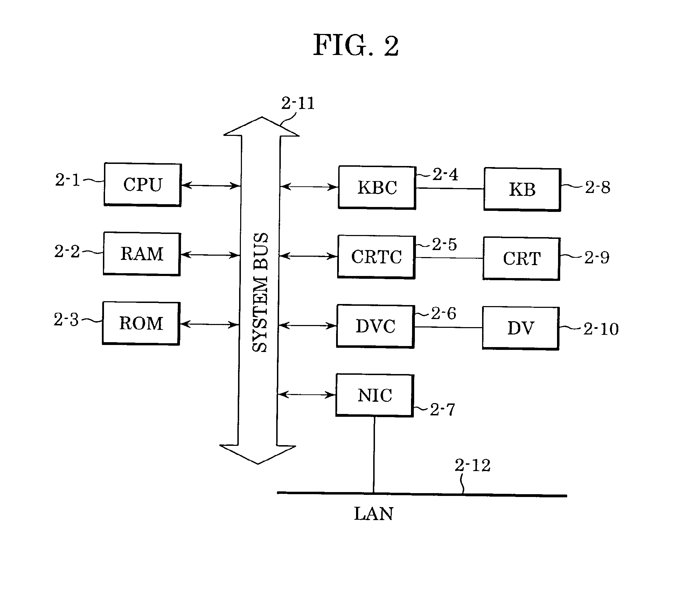

Fig. 2 is a diagram depicting the internal structure of a network device according to one embodiment of the present invention. As shown in Fig. 2, a network control section and a device (printer) control section operate under control of one CPU. The print device 1-1 includes a CPU 2-1 for executing programs stored in a ROM 2-3, and comprehensively controls the devices connected to a system bus 2-11. Furthermore, a RAM 2-2 functions as a main memory, a work area, etc. of the CPU 2-1.

The RAM 2-2 stores a host-server notification-destination address, an update interval of counter information, print job information, and jobs. Also included is a backup RAM (not shown in the figure) for storing system information such as a host-server notification-destination address and an update interval of counter information. A keyboard controller (KBC) 2-4 controls instructions entered on a keyboard (KB) 2-8.

A CRT controller (CRTC) 2-5 controls the display of a CRT display (CRT) 2-9. Users can edit application information and a timer through the use of the keyboard 2-8 and the CRT display 2-9. A device controller (DVC) 2-6 controls a printer (DV) 2-10 and other devices. A network interface card (NIC) 2-7 sends/receives data to/from another network device or another PC via a LAN 2-12.

According to the present embodiment, the LAN 2-12 is the same as the LANs 1-4 and 1-8 in Fig. 1. Host-server notification-destination addresses, update intervals of counter information, print job information, and jobs may be stored in another storage device such as a hard disk. Furthermore, for example, a touch panel of a liquid crystal panel may be used as a virtual keyboard in place of the keyboard 2-8.

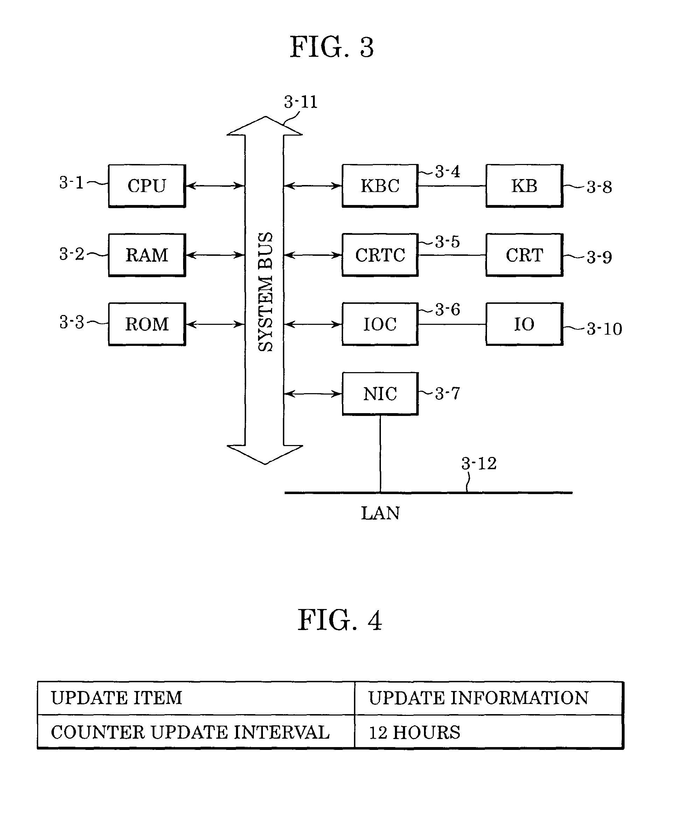

Fig. 3 is a diagram depicting the internal structure of a network host-server apparatus according to one embodiment of the present invention. As shown in Fig. 3, a network control section and a device (printer) control section operate under control of one CPU. The host-server apparatus 1-7 includes a CPU 3-1 for executing programs stored in a ROM 3-3, and comprehensively controls the devices connected to a system bus 3-11.

Furthermore, a RAM 3-2 functions as a main memory, a work area, etc. of the CPU 3-1. This RAM 3-2 stores management information for each device. The system information is also stored in a backup RAM (not shown in the figure). A keyboard controller (KBC) 3-4 controls instructions entered on a keyboard (KB) 3-8.

A CRT controller (CRTC) 3-5 controls the display of a CRT display (CRT) 3-9. Users can request instructions for devices through the use of the keyboard 3-8 and the CRT display 3-9. An IO controller (IOC) 3-6 controls input/output 3-10 such as serial and parallel input/output.

A network interface card (NIC) 3-7 sends/receives data to/from another network device or another PC via a LAN 3-12. According to the present embodiment, the LAN 3-12 is the same as the LANs 1-4 and 1-8 in Fig. 1 and the LAN 2-12 in Fig. 2. Management information and instruction information for each device may be stored in another storage device such as a hard disk. Furthermore, for example, a touch panel of a liquid crystal panel may be used as a virtual keyboard in place of the keyboard 3-8.

Fig. 4 is a diagram depicting one example of update information for each device in a host-server apparatus according to the present embodiment.

"Update item" in Fig. 4 refers to an item to be updated for each device as table information. A change to the counter transmission interval is desired in the example, and described as shown in Fig. 4. A numeric value and operation to be updated for each update item are described here as "update information". In this example, a request for changing the update interval of counter information to 12 hours is described. If there is no request, this table is empty. This table can contain a plurality of update items.

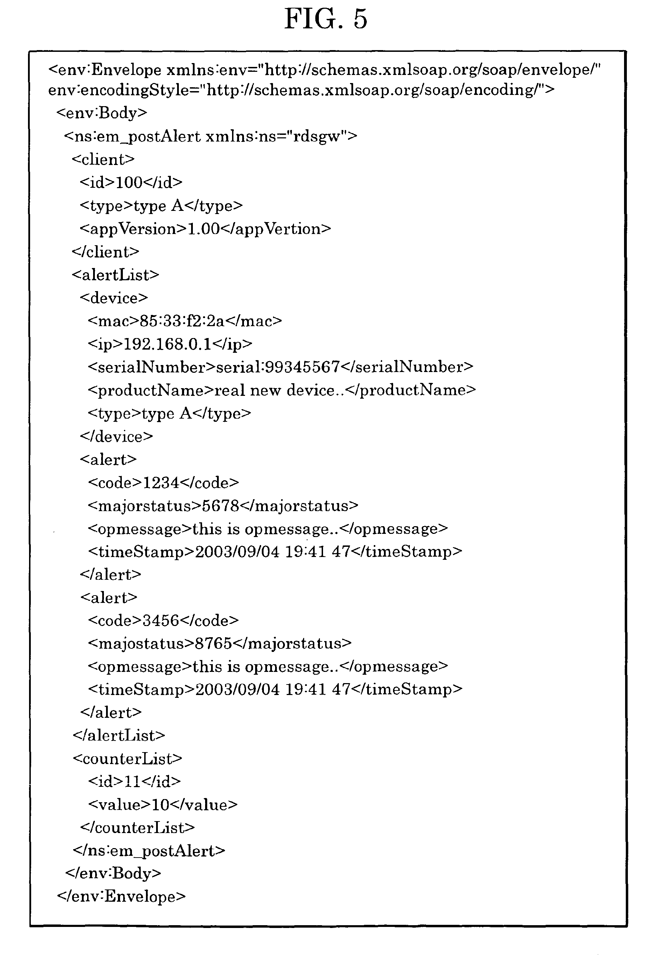

Fig. 5 is a diagram depicting one example of packet data referred to as a post Alert transmitted from a client to a printing device using SOAP over HTTP, according to the present embodiment. This data is described in XML format. The Post Alert packet is a command for notifying the host-server apparatus of information about an error occurring in the device. Here, information such as client information (<client> tag) and an alert information list (<alert List> tag) is described. The <client> tag includes <id> for identifying the client, <type> for identifying the type of the client, and <app Version> for identifying the version of the application.

Furthermore, the alert List includes <device> for identifying the device, a list of <alert> items, and counter information <counter List>. The <device> tag includes <mac> for identifying the low-order 4 bytes of the MAC address, <ip> for identifying the IP address, the serial number <serial Number>, the product name <produce Name>, and the type <type>. The <alert> tag includes an error code <code>, <major status> of the major classification, character information <op message> indicating the error, and timestamp information <timestamp>. The <counter List> tag includes the service mode number <id> and the counter value <value> specified with the service mode number.

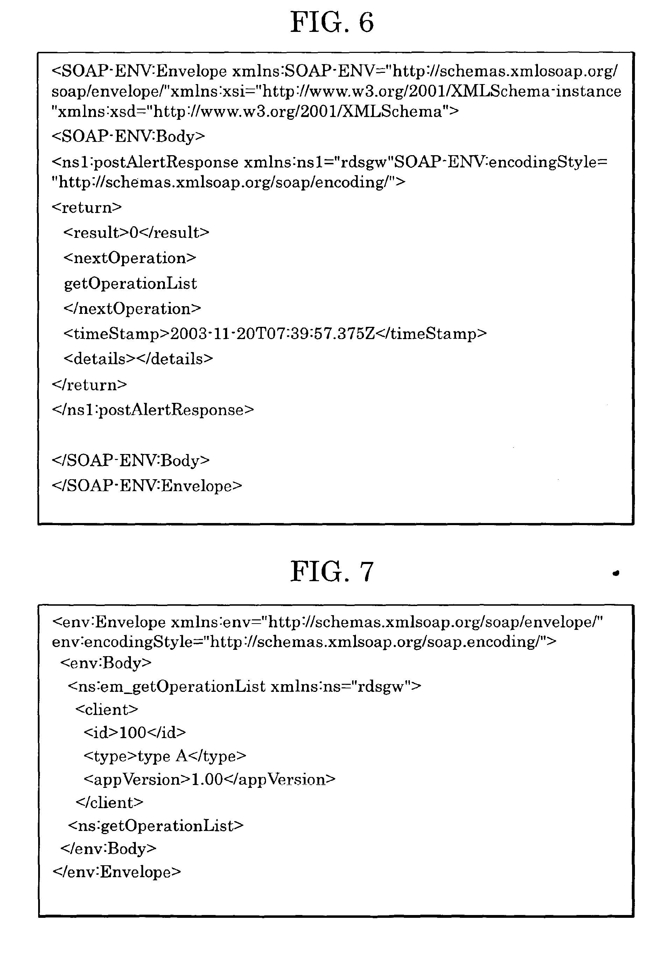

Fig. 6 is a diagram depicting one example of packet data in response to the post Alert packet in Fig. 5. This data is also described in XML format as in Fig. 5, and is transmitted/received based on SOAP over HTTP in the present embodiment. As result information <return> in response to the post Alert command, the Post Alert response packet includes a result code (<result> tag), and an instruction request to the device <next Operation>, timestamp information <time Stamp>, and <detail> describing details.

If the next Operation is described with NULL, it means that there is no operation instruction from the host-server apparatus. Although a request for the get Operation List is described under <next Operation> in this example, a request for another command (e.g., post Service Mode Counter indicating, for example, a request for counter information) may be described.

Fig. 7 is a diagram depicting one example of request packet data corresponding to the get Operation List requested in Fig. 6. This data is also described in XML format as in Fig. 5, and is transmitted/received based on SOAP over HTTP in the present embodiment. The get Operation List request packet includes, under the client information (<client> tag), <id> for identifying the client, <type> for identifying the type of the client, and <app Version> for identifying the version of the application in the <client> tag. The present invention is not limited to this tag structure, as long as the packet indicates the get Operation List.

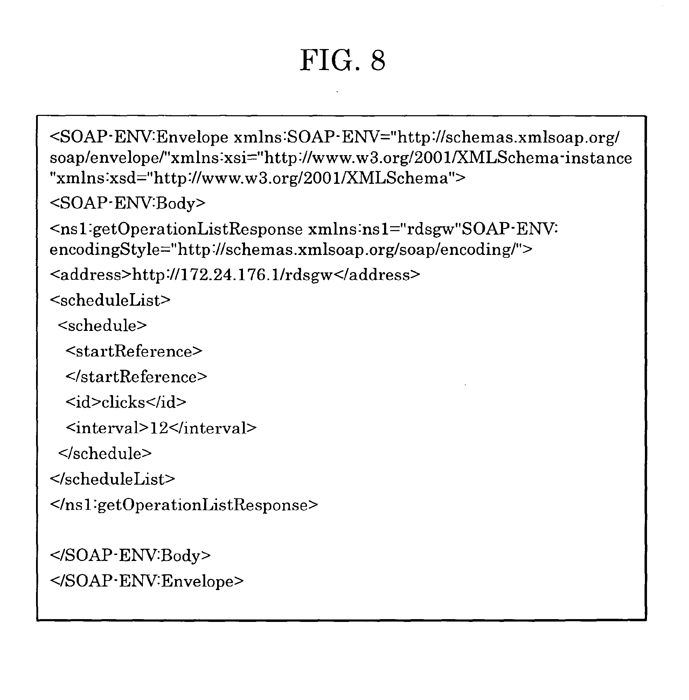

Fig. 8 is a diagram depicting one example of packet data in response to the get Operation List packet in Fig. 6. This data is also described in XML format as in Fig. 5, and is transmitted/received based on SOAP over HTTP in the present embodiment. As result information in response to the Get Operation List command, the Get Operation List response packet includes <address> of the host-server apparatus and a list of schedule information <schedule List>. The <schedule List> tag includes schedule information <schedule>, under which the start time <start Reference>, the update identification information <id> (here, it is "counter information acquisition" called clicks), and the update interval <interval> (here, 12 hours is specified) are specified. Although this response packet to get Operation List includes <address> and <schedule List>, the present invention is not limited to this structure.

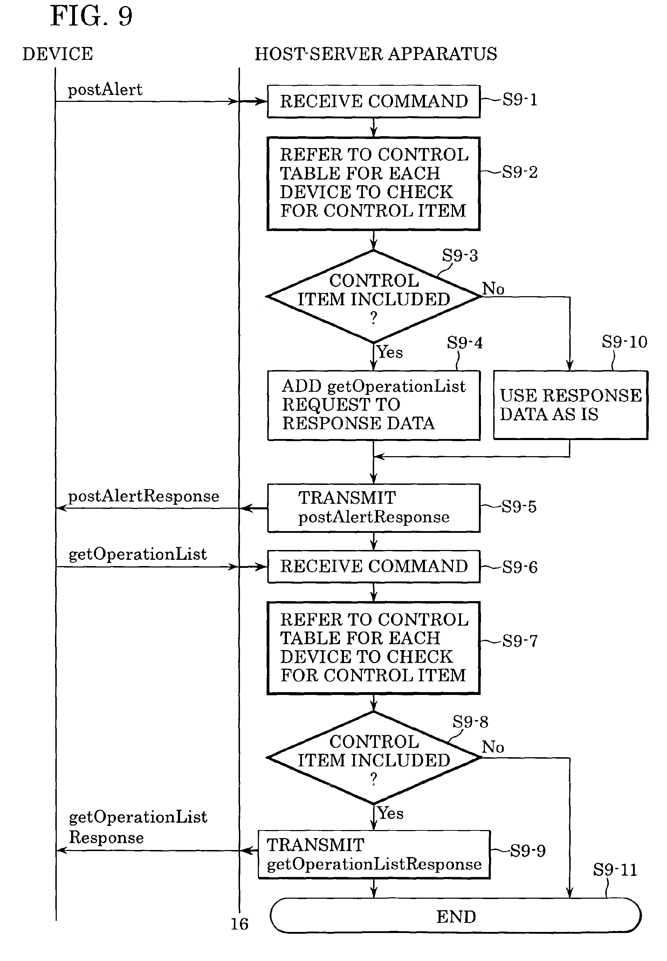

Fig. 9 is a flowchart of a sequence for notifying a device of an instruction from a host-server apparatus.

The operation of the host-server apparatus according to the present embodiment will now be described with reference to Fig. 9.

When, for example, the post Alert packet shown in Fig. 5 is transmitted from the device to the host-server apparatus, a command is received (step S9-1) in the host-server apparatus, and it is confirmed whether there is an item to be controlled (step S9-2) by referring to the control table for each device shown in Fig. 4.

Next, it is determined in step S9-3 whether there is an item to be controlled. If there is an item to be controlled, the flow proceeds to step S9-4. If there is no item to be controlled, the flow proceeds to step S9-10. In step S9-4, get Operation List is added to XML data, as shown in Fig. 6. In step S9-5, the post Alert Response is transmitted.

Next, in step S9-6, the get Operation List command is received. Then, in step S9-7, it is confirmed whether there is an item to be controlled by referring to the table in step S9-2 again.

Next, it is determined in step S9-8 whether there is an item to be controlled. If it is determined that there is an item to be controlled, the flow proceeds to step S9-9. If there is no item to be controlled, the flow proceeds to step S9-11 to end processing. The server can give an operation instruction not only to post Alert but also to every packet transmitted from the device.

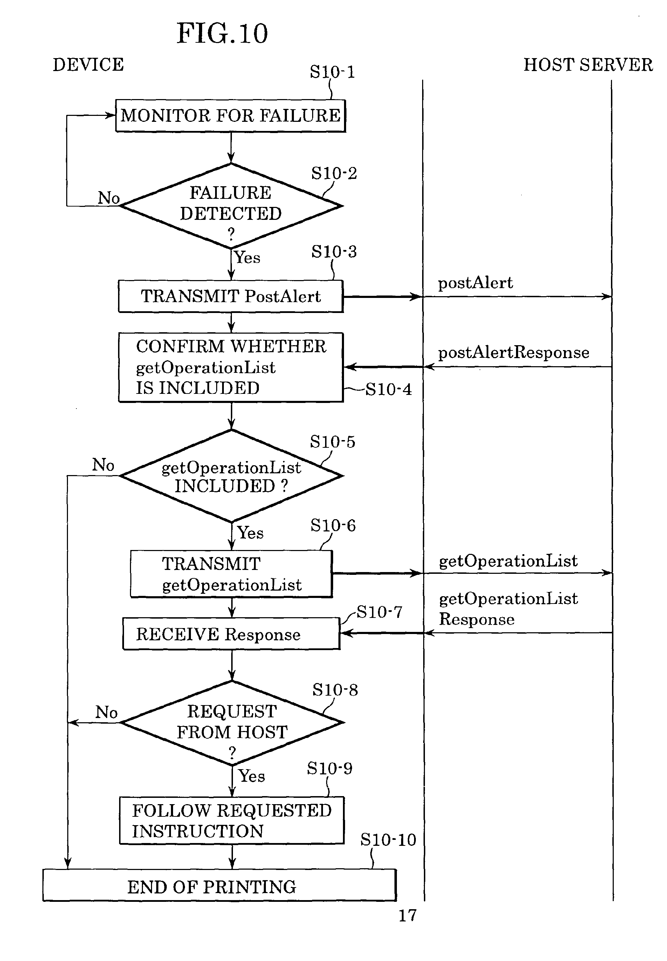

Fig. 10 is a flowchart of a sequence for processing a request from a host-server apparatus in a device.

The operation of the device according to the present embodiment will now be described with reference to Fig. 10.

The device is monitored for the occurrence of a failure (step S10-1).

Next, it is determined in step S10-2 whether a failure has occurred. If there is a failure, the flow proceeds to step S10-3. If there is no failure, the flow returns to step S10-1. In step S10-3, the post Alert is transmitted.

Next, in step S10-4, the post Alert Response is received from the host-server apparatus, and it is confirmed whether the XML data includes a get Operation List. In step S10-5, it is determined whether a get Operation List is included. If a get Operation List is included, the flow proceeds to step S10-6. If no get Operation List is included, the flow proceeds to step S10-10. In step S10-6, the get Operation List is transmitted, and the flow proceeds to step S10-7. In step S10-7, the get Operation List Response is received, and the flow proceeds to step S10-8.

Next, in step S10-8, it is determined whether there is a request from the host in the get Operation List Response. If it is determined that there is a request, the flow proceeds to step S10-9. If there is no request, the flow proceeds to step S10-10. In step S10-9, the instruction of the request from host-server apparatus is followed. If the get Operation List Response as described in Fig. 8 is received, the device changes schedule for transmitting counter information to the host-server apparatus, for example, start time and interval, in accordance with the request in the get Operation List Response. In other words, an operation, which is defined in the Operation List Response, instructs the device to change its schedule information. If the flow proceeds to step S10-10, processing ends.

Although an example of an application where irregular transmission is carried out to the host-server apparatus experiencing a failure is shown in step S10-1, the present proposal can be realized in all responses, such as a communication test at power ON or according to an operator's instruction, counter transmission carried out at regular intervals, and so on.

Furthermore, it is determined in step S10-3 whether there is only a get Operation List. Instead, an instruction, such as a counter transmission request, can also be received here and a command other than get Operation List may be transmitted to the host-server apparatus.

As a reply to communication from the device, the host-server apparatus can transmit to the device a request for the transmission of an operation acquisition request to give an operation instruction, such as a change to schedule information, as promptly as possible, without having to wait for the device to automatically or regularly transmit an operation acquisition request.

Furthermore, the host-server apparatus can prepare a schema of an operation instruction request for a transmission test (at power ON or according to an operator's instruction) transmitted from the device and a SOAP response from the information processing apparatus to any regular (counter information) or irregular (error information) SOAP function, and can describe an instruction, such as a change to schedule information, in this schema to promptly transmit a request from the server as a SOAP response to any SOAP function from the device in an environment such as a firewall.

Furthermore, the present invention covers a case where a computer (or CPU or MPU) of an apparatus or a system connected to devices is supplied with program code of software for controlling the devices to achieve the function according to the above-described embodiments and the devices are operated according to the program stored in the computer of the system or the apparatus.

In this case, the program code itself of software achieves the function of the above-described embodiments. Thus, the program code itself and means for supplying the computer with the program code, such as a storage medium that records the program code, are included in the present invention. The storage medium for recording the program code includes a flexible disk, a hard disk, an optical disk, a magneto-optical disk, a CD-ROM, a magnetic tape, a nonvolatile memory card, and a ROM.

Furthermore, besides the case where the function according to the embodiments is achieved by executing the supplied program code in the computer, the present invention covers a case where the program code achieves the function according to the embodiments in cooperation with the OS (operating system) or other applications working on the computer executing the program code.

The present invention further covers a case where, after the supplied program code is written in a memory of a function extension board of the computer or in a memory of a function extension unit connected to the computer, the CPU or the like in the function extension board or function extension unit achieves the function of the above-described embodiments by performing part or all of processing in accordance with commands of the program code.

While the present invention has been described with reference to exemplary embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An information processing apparatus communicating with a device, the information processing apparatus comprising:
operation-acquisition-request receiving means for receiving an operation acquisition request from the device for getting, from the information processing apparatus, an operation for execution by the device;
operation-transmitting means for transmitting to the device an operation for execution by the device according to the operation-acquisition-request; and
response-transmitting means for transmitting a request for transmission of the operation acquisition request in response to a communication from the device if there is an operation for execution by the device.

2. The information processing apparatus according to claim 1, wherein a schema of the request for transmission of the operation acquisition request is prepared for a SOAP response to a SOAP function in a transmission test from the device to describe an instruction to the device in the schema if there is an instruction to the device.

3. The information processing apparatus according to one of claims 1 and 2, further comprising:
determination means for determining whether there is an operation necessary for the communicating device,
wherein the response-transmitting means transmits the request for transmission of the operation acquisition request if there is an operation necessary for the device, and does not transmit the request for transmission of the operation acquisition request if there is no operation necessary for the device.

4. The information processing apparatus according to one of claims 1 to 3, wherein the reply transmitted by the response-transmitting means is in response to at least one of a connection test to the information processing apparatus, regularly reported device information, and failure information about a failure occurring irregularly.

5. A device communicating with an information processing apparatus, the device being arranged to perform an operation sent from the information processing apparatus, the device comprising:
communication means for communicating with the information processing apparatus;
response-information receiving means for receiving response information from the information processing apparatus in response to the communication by the communication means;
transmission means for transmitting to the information processing apparatus an operation acquisition request for getting, from the information processing apparatus, an operation for execution by the device; and
operation-receiving means for receiving an operation corresponding to the operation acquisition request;
wherein the transmission means transmits the operation acquisition request if the response information received by the response-information receiving means includes a request for transmission of the operation acquisition request.

6. The device according to claim 5, wherein the communication by the communication means includes at least one of a connection test to the information processing apparatus, regularly reported device information, and failure information about a failure occurring irregularly.

7. A network communication system comprising the information processing apparatus according to claim 1 and the device according to claim 5.

8. An information processing method for an information processing apparatus communicating with a device, the information processing method comprising:
receiving from the device an operation acquisition request for getting, from the information processing apparatus, an operation for execution by the device;
transmitting an operation for execution by the device to the device according to the operation acquisition request; and
transmitting a request for transmission of the operation acquisition request in response to a communication from the device if there is an operation for execution by the device.

9. A device method for a device arranged to perform an operation sent from an information processing apparatus, the device method comprising:
receiving response information from the information processing apparatus in response to a communication from the device;
transmitting to the information processing apparatus an operation-acquisition-request for getting, from the information processing apparatus, an operation for execution by the device; and
receiving an operation corresponding to the operation acquisition request, wherein the operation acquisition request is transmitted to the information processing apparatus if the received response information includes a request for transmission of the operation acquisition request.

10. A computer-executable program for causing a computer to execute an information processing method, the program comprising:
receiving from a device an operation acquisition request for acquiring an operation for execution by the device from the computer;
transmitting an operation for execution by the device to the device according to the operation acquisition request; and
transmitting a request for transmission of the operation acquisition request in response to a communication from the device if there is an operation for execution by the device.

11. A recording medium storing the program as claimed in Claim 10.

12. A computer-executable program for causing a device to execute a device method, the program comprising:
receiving response information from an information processing apparatus in response to a communication from the device;
transmitting to the information processing apparatus an operation-acquisition request for getting, from the information processing apparatus, an operation for execution by the device; and
receiving an operation corresponding to the operation acquisition request, wherein the operation acquisition request is transmitted to the information processing apparatus if the received response information includes a request for transmission of the operation acquisition request.

13. A recording medium storing the program as claimed in Claim 12.
